# EUROPEAN PATENT SPECIFICATION

(11) **EP 0 508 487 B1**
(45) Date of publication and mention of the grant of the patent: **01.09.1999**
(21) Application number: 92106363.2
(22) Date of filing: 13.04.1992
(51) Int. Cl.: G08B 3/10, G08B 5/22

(54) **Radio paging receiver capable of displaying a predetermined message**
Ein zur Anzeige einer vorbestimmten Nachricht geeigneter Funkrufempfänger
Récepteur d'appel radio capable d'afficher un message prédéterminé

(30) Priority: 12.04.1991 JP 10656891
(43) Date of publication of application: 14.10.1992
(73) Proprietor: NEC CORPORATION, Tokyo (JP)
(72) Inventor: Tani, Hiroaki, c/o NEC Corporation, Minato-ku, Tokyo (JP)
(74) Representative: VOSSIUS & PARTNER

(56) References cited:
- EP-A- 0 135 783
- EP-A- 0 360 228
- WO-A-88/09104
- GB-A- 2 154 347
- US-A- 4 839 628
- US-A- 5 025 252

## Description

This invention relates to a radio paging receiver for receiving call signals specific to the receiver one at a time and for receiving a message signal that follows each call signal to represent a message.

A conventional radio paging receiver provides various information services. For each of the information service, a service fee must be paid by an owner of the receiver. If the owner does not pay the service fee, the service has to be suspended. In order to suspend the information service, a predetermined message is sent from a control station to put the receiver out of a receiving operation for one of the call signals that follows the predetermined signal.

Such a conventional radio paging receiver is disclosed in United States Patent No. 4,639,726 issued to Yoshio Ichikawa et al and assigned to the present assignee. When the radio paging receiver is supplied with electric power from an electric power supplying section, the receiver is put in the receiving operation. According to an embodiment of the Ichikawa et al patent, the radio receiver is disabled and displays the message "pay fee", but may apparently be put back in operation if the electric power is once turned off and then turned on. According to a second embodiment in said patent, the pager may be permanently disabled by blowing a fuse in a PROM, the display showing a message if the PROM does not operate.

### Summary of the Invention:

It is therefore an object of the present invention to provide a radio paging receiver capable of being disabled while still displaying a predetermined message on a display and sounding an alarm when the receiver receives a predetermined signal even when electric power has subsequently been turned off and then again turned on.

Other objects of this invention will become clear as the description proceeds.

These objects have been achieved by a radio pager in accordance with claim 1.

### Brief Description of the Drawing:

Fig. 1 is a block diagram of a radio paging receiver to which this invention is applicable;
Fig. 2 is a signal format for use in describing operation of the paging receiver illustrated in Fig. 1;
Fig. 3 is a block diagram of a CPU of the paging receiver illustrated in Fig. 1;
Fig. 4 is a flow chart for use in describing operation of a conventional paging receiver; and
Fig. 5 is a flow chart for use in describing operation of the radio paging receiver according to an embodiment of this invention.

### Description of the Preferred Embodiment:

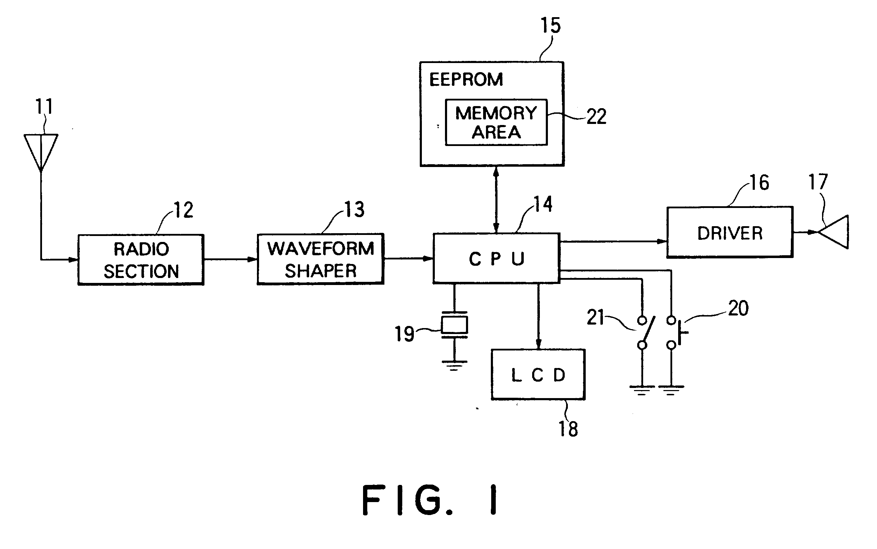

Referring to Fig. 1, attention will be directed to a radio paging receiver according to a preferred embodiment of the present invention. The radio paging receiver is connected to an antenna 11 for receiving a radio signal as a received radio signal and to a power source (not shown). The radio signal is supplied from a control station (not shown) and carries a digital signal which will later be described more in detail.

A radio section 12 is for subjecting the received radio signal to frequency conversion, amplification, and demodulation. The radio section 12 comprises a discriminator (not shown) for producing a demodulated signal. A waveform shaper 13 is for shaping the waveform of the demodulated signal to produce a reproduction of the digital signal. The radio section 12 and the waveform shaper 13 are known in the art. For example, the radio section 12 may be of the type described in United States Patent No. 4,194,153 issued to Masaru Masaki et al and assigned to the present assignee. The waveform shaper may comprise a low-pass filter and a comparator.

The reproduction of the digital signal, namely, a reproduced digital signal is supplied from the waveform shaper 13 to a CPU 14 operable in cooperation with an EEPROM (electrically erasable programmable read-only memory) 15 for memorizing a number signal representative of an identification number which is specific to the illustrated radio paging receiver. The EEPROM is furthermore for memorizing various signals as will become clear as the description proceeds.

The CPU 14 is connected to a driver circuit 16 and an LCD (liquid crystal display) unit 18. The driver circuit 16 is for making a loudspeaker 17 produce a call or beep tone. The display unit 18 is for providing a visual display. The driver circuit 16 may be an amplifier. The display unit 18 may be a twelve-digit seven-segment liquid crystal display unit. Each segment may be for displaying a seven-by-five-dot matrix. The display unit of this type can display various alphanumeric symbols, such as numerals and capital or lower-case letters.

The radio paging receiver further comprises a quartz oscillator 19 for driving the CPU 14 and a reset switch 20 for stopping the call tone and erasing the visual display. A power source switch 21 is connected to the CPU 14 to connect the power source to the CPU 14 and other elements of the receiver. In this manner, the power source switch 21 serves as a power supply arrangement.

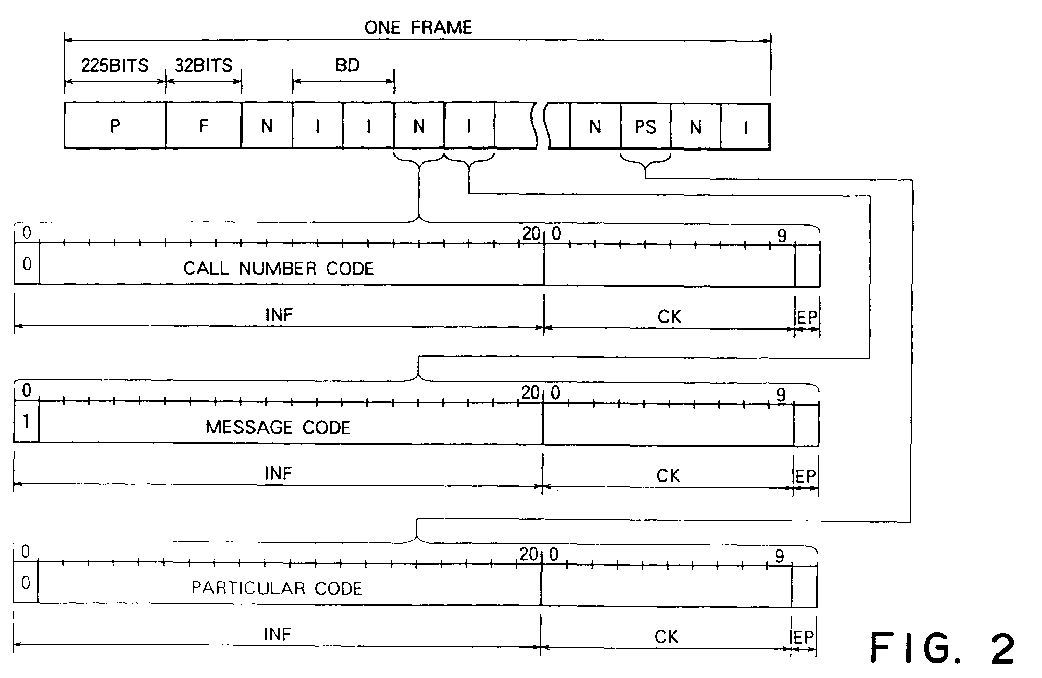

Referring to Fig. 2, each frame of the radio signal carries, as depicted along a first or top row, the digital signal which comprises a preamble signal P of p bits and a frame synchronizing code F of f bits. The numbers p and f may be, for example, 225 and 32, respectively. The frame synchronizing code F appears in every frame and is followed by a plurality of call signals N and a plurality of message signals I.

Each of the call signals N represents a call or directory number code. Each of the message signals I comprises a message code. A leading one of the call signals N succeeds immediately after the frame synchronizing code F. A single one of the message signals I usually succeeds each of the call signals N. However, a message signal I may be succeeded by another message signal I as shown at a position BD. In the example being illustrated, at least one message signal I succeeds each of the call signals N.

As depicted along a second row on a large scale for one of the call signals N, the call number code is represented by an information bit part INF of twenty-one bits 0 through 20. The information bit part INF is followed by a check bit part CK of ten bits 0 through 9 and then by a parity bit part EP of one bit. In each message signal I depicted in detail along a third row, the message code is given by a similar information bit part INF which is likewise followed by a check bit part CK and thereafter by a parity bit part EP. As a result, each of the call signals N and the message signals I has a word length of thirty-two bits.

The information bit part INF and the check bit part CK of each of the call signals N and the message signals I are given by Bose-Chaudhuri-Hocquenghem (BCH) codes which are known in the art. The parity bit is for even-number parity check. A most significant bit (MSB) of each of the call signals N and the message signals I is for use in distinguishing between the call signals N and the message signals I by logic "0" for the call signals N and by logic "1" for the message signals I.

It may be mentioned here that a radio paging receiver is operable in response to a particular signal PS transmitted in the radio signal succeeding a call signal N. The particular signal PS is herein referred to alternatively as a specific message signal. Preceding the particular signal PS, the call signal N is alternatively referred to herein as a specific call signal.

As shown along a fourth or bottom row and like each of the call signals N and the message signals I, the particular signal PS consists of an information bit part INF of twenty-one bits, a check bit part CK of ten bits, and a parity bit part EP of one bit. The information bit part INF and the check bit part CK are given by the BCH codes. The parity bit is for even number parity check.

The particular signal PS is distinguished from each message signal I by giving a logic "0" bit to the most significant bit which is common to the'particular signal PS and its information bit part INF. Twenty remaining bits of the information bit part INF except the most significant bit are for use in giving one of a few kinds of particular codes. For example, one of the particular codes corresponds to a service suspension code.

In the manner described heretobefore, a service fee must be paid by an owner of the paging receiver when the owner may enjoy each of various information services. The fee may be either preliminarily paid or paid upon request from a control station for the receiver and a plurality of like radio paging receivers. When the control station detects that the owner does not pay the fee during a predetermined number of days, the control station sends a predetermined message to the receiver in question as the particular signal PS following the call signal N. The particular signal PS makes the CPU 14 put the receiver out of operation.

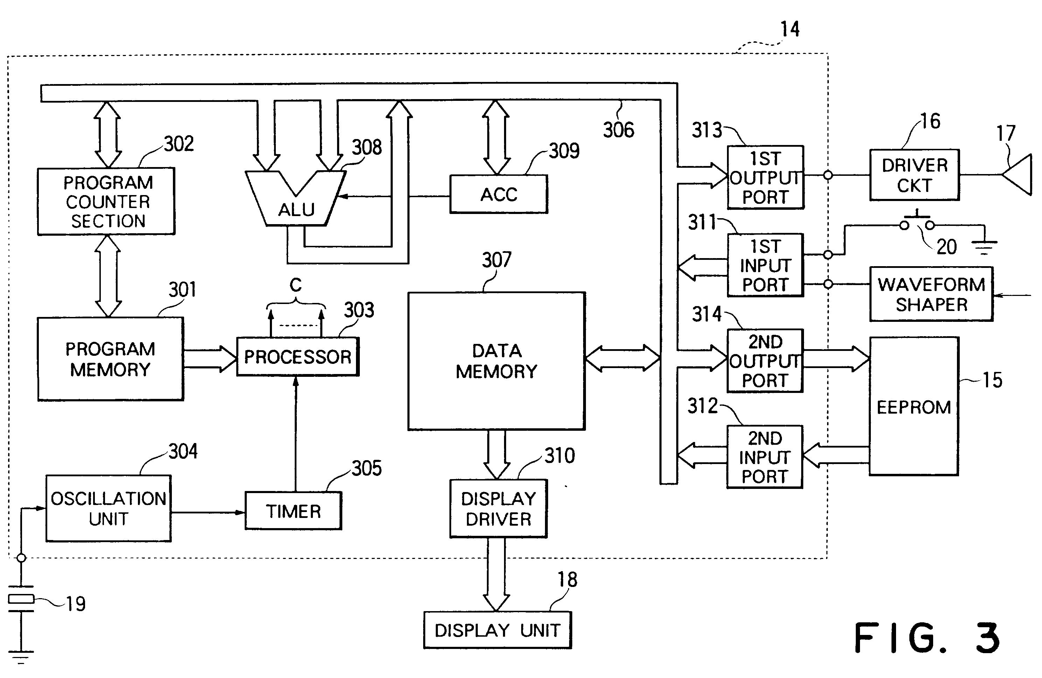

Referring to Fig. 3 as well as to Fig. 1, the CPU 14 is implemented as a one-chip central processing unit. The CPU 14 comprises a program memory 301 for memorizing a main program composed of a succession of instructions. In addition, a specific synchronizing pattern code is stored in the program memory 301 to detect the frame synchronizing code F (Fig. 2). The specific synchronizing pattern code has the same pattern as the frame synchronizing code F.

The main program comprises a partial program which is necessary to receive the specific call signal N specific to the receiver and to receive the specific message signal I which succeeds the specific call signal. It is to be noted here that the program memory 301 memorizes, in addition to the main program, a particular program for defining by a succession of instructions a suspending operation which should be carried out after the particular signal PS is received by the CPU 14 next succeeding the specific call signal. Briefly stated, the particular program is for inhibiting the receiving operation for the call signal which is specific to the receiver and follows the particular signal.

A program counter section 302 is coupled to the program memory 301 for use in accessing the program memory 301 by an address signal, namely, by a content of the program counter section 302 which is usually counted up by one at every instruction but sometimes rewritten by particular instructions, such as jump instructions and the like.

At any rate, the program memory 301 produces the instructions, the synchronizing pattern code, and display data. The display data correspond to a combination of the message code and the particular code stored in the memory 301 in accordance with the address signal kept in the program counter section 302.

Responsive to the instructions, a processor 303 is put into operation to deliver various kinds of control signals C to structural elements of the CPU 14 in synchronism with a clock pulse sequence which is described in the following.

In order to supply the clock pulse sequence to the processor 303, the CPU 14 comprises an oscillation unit 304 connected to the quartz oscillator 19 located outside of the CPU 14 and a timer 305 connected between the oscillation unit 304 and the processor 303.

The program counter section 302 is coupled through a data bus 306 to a data memory 307. As a result, the address signal kept in the program counter section 302 can be delivered to the data memory 307 under control of the processor 303. Additionally, the program counter section 302 is supplied with a jump address signal indicative of a jump address through the data bus 306. An arithmetic logic unit (ALU) 308 and an accumulator (ACC) 309 are coupled to the data bus 306 to cooperate in executing each instruction as will become clear as the description proceeds.

The CPU 14 comprises a display driver 310 between the data memory 307 and the display unit 18. The display driver 310 is driven in a manner to be described so as to provide the visual display on the display unit 18.

The data bus 306 is coupled to first and second input ports 311 and 312 connected to the waveform shaper 13 and to the EEPROM 15, respectively. The data bus 306 is coupled furthermore to first and second output ports 313 and 314 connected to the driver circuit 16 and the EEPROM 15, respectively. The first input port 311 is additionally coupled to the reset switch 20.

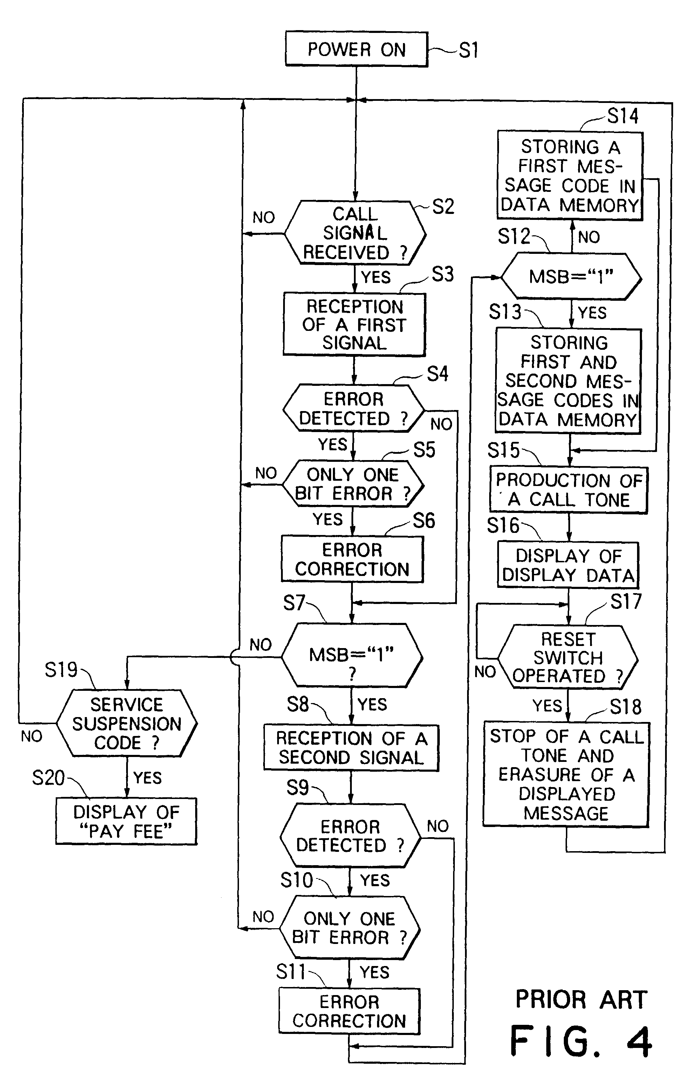

Referring to Fig. 4 together with Figs. 1, 2, and 3, the description will proceed to operation of the above-mentioned embodiment of the Ichikawa et al patent, which is similar in structure to the receiver illustrated with reference to Fig. 1. The receiver is energized into an initial state when the power source switch 21 is closed at a first stage S1. The first stage S1 proceeds to a second stage S2 at which operation is carried out to detect whether or not the call signal is specific to the receiver or assigned to the receiver as an assigned call signal. When the assigned call signal is received, the second stage S2 is followed by a third stage S3. Otherwise, the pager receiver returns to the initial stage S1.

In order to detect the assigned call signal, namely, an assigned call number code at the second stage S2, the CPU 14 carries out the receiving operation of selectively receiving the assigned call signal. More specifically, the EEPROM 15 is accessed under the control of the partial program stored in the program memory 301 so as to derive the number signal representative of the identification number mentioned before. The number signal is compared by the use of the arithmetic logic unit 308 with a received call signal sent through the first input port 311 to detect the assigned call signal. Thus, elements and parts operable in cooperation with the partial program may be referred to as a receiving section and is a combination of the program memory 301, a part of the processor 303, and the arithmetic logic unit 308.

At the third stage S3, reception operation is carried out to receive a single word succeeding the assigned call signal. Such a single word may be either the message signal I (shown along the third row of Fig. 2) or the particular signal PS (shown along the bottom row). The single word will be referred to as a first one of additional signals that is identical with either the message signal I or the particular signal PS. The third stage S3 is executed under the control of the partial program. The first additional signal is sent to the accumulator 309.

A fourth stage S4 follows the third stage S3 to detect presence or absence of an error by the use of the parity bits in a usual manner. If the error is present in the first additional signal, error correcting operation is carried out in fifth and sixth stages S5 and S6. Specifically, when a single error is detected in the fifth stage S5, the error is corrected in the sixth stage S6. Otherwise, the fifth stage S5 proceeds to the initial state into which the receiver is put in the first stage S1. The above-mentioned error correcting operation is possible by the use of the BCH codes in a well-known manner.

Either of the fourth and the sixth stages S4 and S6 is followed by a seventh stage S7 at which judgement is made as regards the most significant bit of the first additional signal. If the most significant bit has a logic "1" level, the seventh stage S7 is followed by an eighth stage S8. In this event, the first additional signal carries a first message code as mentioned before and may be named a first message signal. Otherwise, the seventh stage S7 is succeeded by a nineteenth stage S19 as will later be described in detail. The above-mentioned judgement of the most significant bit of the first additional signal is made by the use of the arithmetic logic unit 308 under the control of the particular program stored in the program memory 301.

For the time being, let it be presumed that the most significant bit of the first additional signal has the logic "1" level. Under the circumstances, the seventh stage S7 is succeeded by an eighth stage S8 at which a second one of the additional signals is received under control of the particular program. The second additional signal is stored in the accumulator 309 and will later become clear.

The second additional signal is processed at ninth through eleventh stages S9 to S11 in a manner similar to the first additional signal. In other words, the ninth through the eleventh stages S9 to S11 are similar to the fourth through the sixth stages S4 to S6, respectively. Either the ninth stage S9 or the eleventh stage S11 is succeeded by a twelfth stage S12 for judging the most significant bit of the second additional signal. The logic "1" level of the most significant bit indicates that the second additional signal conveys a second message code like the first additional signal. In this event, the second additional signal may be named a second message signal. The second message signal is kept in the accumulator 309.

When the most significant bit of the second additional signal has the logic "1" level, both of the first and the second message codes of the first and the second message signals are stored in a data area of the data memory 307 at a thirteenth stage S13. When the most significant bit of the second additional signal has the logic "0" level, the second additional signal is not a message signal. That is to say, absence of any message signal is indicated by the logic "0" level of the second additional signal. In this case, only the first message code of the first message signal is detected at the seventh stage S7 and is stored in the data area of the data memory 307 at a fourteenth stage S14.

Each of the first and the second message signals has the message code of five digits at maximum, as mentioned before. Each message code is stored in the data memory 307 as display data.

After storage of the display data in the data memory 307, the processor 303 produces a drive signal as one of the control signals C. The driver circuit 16 makes the loudspeaker 17 produce the call tone in response to the drive signal at a fifteenth stage S15.

At a sixteenth stage S16, the display driver 310 drives the display unit 18 to provide the visual display corresponding to the first message code and/or the second message code in response to the drive signal. After the sixteenth stage S16, a seventeenth stage S17 is carried out so as to judge whether or not the reset switch 20 is closed.

When the reset switch 20 is closed, the call tone is stopped and the displayed message is erased at an eighteenth stage S18. As a result, the known radio paging receiver is put in the initial state.

The seventh stage S7 is succeeded by the nineteenth stage S19 mentioned above when the most significant bit of the first additional signal has the logic "0" level. The logic "0" level of the first additional signal shows that the first additional signal is the particular signal PS.

The nineteenth stage S19 succeeds the seventh stage S7 and is for judging whether or not the first additional signal carries the service suspension code of the particular signal PS by the use of the arithmetic logic unit 308 in accordance with the particular program.

If the first additional signal carries the service suspension code, the ALU 308 produces a detection signal. In this case, the particular signal may be called a predetermined signal of a single word. The processor 303 controls the display driver 310 in response to the detection signal. As a result, the display driver 310 drives the display unit 18 to make the visual display indicate a predetermined message stored in the data memory 307 in response to the particular signal at a twentieth stage S20. The predetermined message may be "PAY FEE" which indicates that the owner of the radio paging receiver in equation should pay the service fee as described heretobefore. The display of the message lasts until the power source switch 21 is opened.

Responsive to the particular signal PS, the particular program stored in the program memory 301 makes the processor 303 inhibit the receiving operation of the receiving section for the call signal N which is specific to the radio paging receiver under consideration and appears following the particular signal PS in the next frame of the radio signal. Such inhibition is possible, for example, by disabling the arithmetic logic unit 308.

The conventional radio paging receiver does not display the predetermined message even when the processor 303 inhibits the receiving operation of the receiving section when the power source switch 21 is opened and then closed. As a result, the owner of the receiver can not notice that the receiver is not put in the receiving operation.

According to a second embodiment of the Ichikawa et al patent, the receiver comprises a destruct circuit for destructing data memorized in a PROM (programmable read only memory) which is for memorizing a call signal specific to the receiver as the data. The destruct circuit destructs the data in the PROM when the receiver receives the predetermined message mentioned above. In this event, a reception controller (CPU) of the receiver can not access to the PROM. As a result, the receiver can not be put in an operation state. The receiver comprises a display for displaying a message. The display displays a predetermined message such as "PAY FEE", when the reception controller can not access to the PROM.

The receiver can not judge whether or not the PROM is destructed by the destruct circuit. That is, the receiver can not judge whether or not the PROM has a trouble. As a result, the display displays the predetermined message, even though an owner of the receiver payed a service fee. In addition, the receiver cannot be put in the operation state unless a new PROM with storage of the call signal specific to the receiver is substituted for the PROM in which the data is destructed.

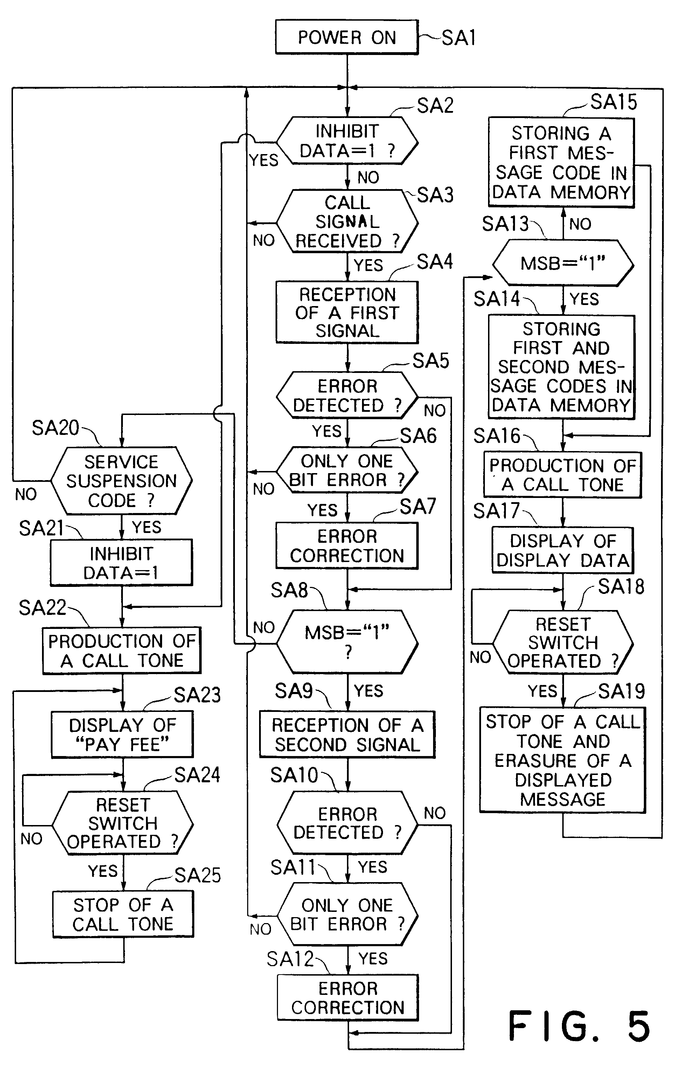

Referring to Fig. 5 together with Figs. 1, 2, and 3, the description will proceed to a preferred operation of the radio paging receiver illustrated with reference to Figs. 1 through 3.

Referring more particularly to Fig. 1, the EEPROM 15 has a memorizing area 22 for memorizing an inhibit signal as an inhibit data. The inhibit signal is produced by the processor 303 when the receiver receives the predetermined signal mentioned above. The processor 303 is not put into operation when the inhibit data has the logic "1" level.

The radio paging receiver is energized into an initial state when the power source switch 21 is closed at a first stage SA1. The first stage SA1 proceeds to a second stage SA2 at which operation is carried out to judge whether or not the inhibit data has the logic "1" level. When the inhibit data has not the logic "1" level, the second stage SA2 is followed by a third stage SA3. Otherwise, the second stage SA2 is followed by a twenty-second stage SA22.

The third through twentieth stages SA3 to SA20 are similar to the second through the nineteenth stages S2 to S19 described in conjunction with Fig. 4, respectively.

In the manner described in connection with Fig. 4, the twentieth stage SA20 succeeds the eighth stage SA8 and is for judging whether or not the first additional signal carries the service suspension code of the particular signal PS by the use of the arithmetic logic unit 308 in accordance with the particular program. If the first additional signal carries the service suspension code, the arithmetic logic unit 308 produces a detection signal.

In connection with Fig. 5, the processor 303 produces the inhibit signal to the EEPROM 15 in response to the detection signal. The memorizing area of the EEPROM 15 is stored with the inhibit data of the logic "1" level when supplied with the inhibit signal from the processor 303 at a twenty-first stage SA21.

Either of the second and the twenty-first stages SA2 and SA21 is followed by the twenty-second stage S22. At the twenty-second stage SA22, the processor 303 produces a drive signal as one of the control signals C. The driver circuit 16 makes the loudspeaker 17 produce the call tone in response to the drive signal which is now produced when the predetermined message is received.

At a twenty-third stage SA23, the processor 303 controls the display driver 310 in response to the detection signal. As a result, the display 18 indicates a predetermined message stored in the data memory 307 in response to the particular signal. The predetermined message may represent "PAY FEE" which indicates that the owner of this radio paging receiver in question should pay the service fee as described heretobefore.

After the twenty-third stage SA23, a twenty-fourth stage SA24 is carried out so as to judge whether or not the reset switch 20 is closed. If the reset switch 20 is closed, the call tone is stopped at a twenty-fifth stage SA25. The display of the message lasts until the power source switch 21 opened.

The EEPROM 15 memorizes the inhibit data even after the power source switch 21 is opened. The radio paging receiver displays the predetermined message when the power source switch 21 is later closed.

If the owner pays the service fee, the inhibit data can be erased from the memory area of the EEPROM 15 at the control station. The receiver is now operative until another inhibit data is stored in the memory area of the EEPROM 15.

## Claims

1. A radio paging receiver operated by supply of electric power, said radio paging receiver comprising:
receiving means (11-13) for receiving a plurality of call signals and a plurality of message signals following said call signals;
selecting means (14,15) for selecting from said call signals a specific call signal of said call signals that is specific to said receiver and for selecting from said message signals a specific message signal that follows said specific call signal to represent a specific message;
display means (18) for displaying said specific message;
call tone producing means (16,17) for producing a call tone which informs of a reception of said specific message;
reset means (20) for stopping said call tone and for erasing said specific message on said display means (18);
judging means for judging whether or not said specific message is identical with a no-payment message which represents that a fee for using the radio paging receiver has not been paid;
an electrically erasable programmable read only memory (EEPROM-15) for memorizing an inhibit signal when said specific message is identical with said no payment message;
first control means (301) for controlling said selecting means to put said selecting means out of all operation and inhibit said receiving means from performing a receiving operation of succeeding ones of said call signals and message signals following reception of said no-payment message signal when said EEPROM (15) memorizes said inhibit signal;
second controlling means (307) for controlling said display means to make said display means display said no payment message in spite of the operation of said reset means as long as said EEPROM memorizes said inhibit signal, each time said electric power is supplied, said no-payment message visibly lasting during supply of said electric power, and
third controlling means (313) for controlling said call tone producing means (16,17) to make said call tone producing means automatically produce said call tone as long as said EEPROM memorizes said inhibit signal, each time said electric power is supplied.

2. A radio paging receiver as claimed in Claim 1, further comprising power supplying means for supplying electric power to said radio paging receiver, wherein:
said second control means (307) is for controlling said display means for display of said no-payment message on said display means when said inhibit signal is memorized in said EEPROM (15) and when said power supplying means supplies said power to said radio paging receiver.

3. A radio paging receiver as claimed in Claim 1 or 2, further comprising reset means for resetting said display means to an initial state, wherein:
said second control means is for controlling said display means for display of said no-payment message on said display means when said inhibit signal is memorized in said memory means and when said reset means resets said display means to said initial state.

## Patentansprüche

1. Funkrufempfänger, der durch Zufuhr von elektrischer Leistung betrieben wird, wobei der Funkrufempfänger aufweist:
Empfangseinrichtungen (11 - 13) zum Empfang mehrerer Rufsignale und mehrerer Nachrichtensignale, die den Rufsignalen folgen;
Auswahleinrichtungen (14, 15), um aus den Rufsignalen ein spezifisches Rufsignal der Rufsignale, das für den Empfänger spezifisch ist, auszuwählen, und um aus den Nachrichtensignalen ein spezifisches Nachrichtensignal, das dem spezifischen Rufsignal folgt, auszuwählen, um eine spezifische Nachricht darzustellen;
eine Anzeigeeinrichtung (18) zum Anzeigen der spezifischen Nachricht;
Rufton-Erzeugungseinrichtungen (16, 17) zum Erzeugen eines Ruftons, der über einen Empfang der spezifischen Nachricht informiert;
eine Rücksetzeinrichtung (20) zum Beenden des Ruftons und zum Löschen der spezifischen Nachricht auf der Anzeigeeinrichtung (18);
eine Entscheidungseinrichtung zur Entscheidung, ob die spezifische Nachricht mit einer Nichtbezahlungs-Nachricht, die darstellt, daß eine Gebühr zur Benutzung des Funkrufempfängers nicht bezahlt wurde, identisch ist oder nicht;
einen elektrisch löschbaren programmierbaren Festwertspeicher (EEPROM 15) zum Speichern eines Sperrsignals, wenn die spezifische Nachricht identisch mit der Nichtbezahlungs-Nachricht ist;
eine erste Steuereinrichtung (301) zum Steuern der Auswahleinrichtungen, um die Auswahleinrichtungen völlig außer Betrieb zu nehmen und zu verhindern, daß die Empfangseinrichtung einen Empfangsbetrieb für folgende der Rufsignale und Nachrichtensignale leistet, die dem Empfang des Nichtbezahlungs-Nachrichtensignals folgen, wenn der EEPROM (15) das Sperrsignal speichert;
eine zweite Steuereinrichtung (307) zum Steuern der Anzeigeeinrichtung, um zu veranlassen, daß die Anzeigeeinrichtung trotz der Betätigung der Rücksetzeinrichtung solange die Nichtbezahlungs-Nachricht anzeigt, wie der EEPROM das Sperrsignal speichert, wobei die Nichtbezahlungs-Nachricht jedes Mal, wenn die elektrische Leistung zugeführt wird, während der Zufuhr der elektrischen Leistung sichtbar andauert, und
eine dritte Steuereinrichtung (313) zum Steuern der Rufton-Erzeugungseinrichtungen (16, 17), um zu veranlassen, daß die Rufton-Erzeugungseinrichtungen jedes Mal, wenn elektrische Leistung zugeführt wird, automatisch den Rufton erzeugen, solange der EEPROM das Sperrsignal speichert.

2. Funkrufempfänger nach Anspruch 1, der ferner eine Stromversorgungseinrichtung zum Zuführen von elektrischer Leistung an den Funkrufempfänger aufweist, wobei:
die zweite Steuereinrichtung (307) zum Steuern der Anzeigeeinrichtung zur Anzeige der Nichtbezahlungs-Nachricht auf der Anzeigeeinrichtung dient, wenn das Sperrsignal in dem EEPROM (15) gespeichert ist und wenn die Stromversorgungseinrichtung die Leistung an den Funkrufempfänger liefert.

3. Funkrufempfänger nach Anspruch 1 oder 2, der ferner eine Rücksetzeinrichtung zum Zurücksetzen der Anzeigeeinrichtung in einen Anfangszustand aufweist, wobei:
die zweite Steuereinrichtung zum Steuern der Anzeigeeinrichtung zur Anzeige der Nichtbezahlungs-Nachricht auf der Anzeigeeinrichtung dient, wenn das Sperrsignal in der Speichereinrichtung gespeichert ist und wenn die Rücksetzeinrichtung die Anzeigeeinrichtung in den Anfangszustand zurücksetzt.

## Revendications

1. Récepteur radio page actionné par l'alimentation en énergie électrique, ledit récepteur radio page comprenant ;
- des moyens de réception (11-13) destinés à recevoir une pluralité de signaux d'appel et une pluralité de signaux de message qui suivent lesdits signaux d'appel ;
- des moyens de sélection (14, 15) destinés à sélectionner, à partir desdits signaux d'appel, un signal d'appel spécifique parmi lesdits signaux d'appel, qui est spécifique audit récepteur et destiné à sélectionner à partir desdits signaux de message, un signal de message spécifique qui suit ledit signal d'appel spécifique, pour représenter un message spécifique ;
- des moyens d'affichage (18) destinés à afficher ledit message spécifique ;
- des moyens de production de tonalité d'appel (16, 17) destinés à produire une tonalité d'appel qui avertit de la réception dudit message spécifique ;
- des moyens de réinitialisation (20) destinés à arrêter ladite tonalité d'appel et à effacer ledit message spécifique sur lesdits moyens d'affichage (18) ;
- des moyens d'évaluation destinés à évoluer si ledit message spécifique est ou non identique à un message de non-paiement représentant le fait qu'un droit d'utilisation du récepteur d'appel radio n'a pas été payé ;
- une mémoire à lecture seule programmable effaçable électriquement (EEPROM-15) destinée à mémoriser un signal d'inhibition lorsque ledit message spécifique est identique audit message de non-paiement ;
- des premiers moyens de commande (301) destinés à commander lesdits moyens de sélection pour placer lesdits moyens de sélection hors de tout fonctionnement et à empêcher lesdits moyens de réception d'exécuter une opération de réception de signaux successifs desdits signaux d'appel et signaux de message, suivant la réception dudit signal de message de non-paiement, lorsque ladite EEPROM (15) mémorise ledit signal d'inhibition ;
- des deuxièmes moyens de commande (307) destinés à commander lesdits moyens d'affichage pour faire afficher par lesdits moyens d'affichage ledit message de non-paiement, malgré l'action desdits moyens de réinitialisation, tant que ladite EEPROM mémorise ledit signal d'inhibition, à chaque fois que ladite énergie électrique est délivrée, ledit message de non-paiement étant constamment visible pendant la fourniture de ladite énergie électrique ; et
- des troisièmes moyens de commande (313) destinés à commander lesdits moyens de production de tonalité d'appel (16, 17) pour que lesdits moyens de production de tonalité d'appel produisent automatiquement ladite tonalité d'appel tant que ladite EEPROM mémorise ledit signal d'inhibition, à chaque fois que ladite énergie électrique est délivrée.

2. Récepteur radio page selon la revendication 1, comprenant en outre des moyens d'alimentation destinés à délivrer de l'énergie électrique audit récepteur radio page, dans lequel :
- lesdits deuxièmes moyens de commande (307) sont destinés à commander lesdits moyens d'affichage pour l'affichage dudit message de non-paiement sur lesdits moyens d'affichage lorsque ledit signal d'inhibition est mémorisé dans ladite EEPROM (15) et lorsque lesdits moyens d'alimentation délivrent ladite énergie audit récepteur radio page.

3. Récepteur radio page selon la revendication 1 ou 2 comprenant en outre des moyens de réinitialisation destinés à réinitialiser lesdits moyens d'affichage dans un état initial, dans lequel :
- lesdits deuxièmes moyens de commande sont destinés à commander lesdits moyens d'affichage pour l'affichage dudit message de non-paiement sur lesdits moyens d'affichage lorsque ledit signal d'inhibition est mémorisé dans lesdits moyens de mémoire et lorsque lesdits moyens de réinitialisation réinitialisent lesdits moyens d'affichage dans ledit état initial.
